# EUROPÄISCHE PATENTSCHRIFT

(11) **EP 0 317 843 B1**
(45) Veröffentlichungstag und Bekanntmachung des Hinweises auf die Patenterteilung: **04.05.1994**
(21) Anmeldenummer: 88118807.2
(22) Anmeldetag: 11.11.1988
(51) Int. Cl.: C07F 7/00

(54) **Verfahren zur kontinuierlichen Herstellung von Orthoestern des Titans**
Process for the continuous preparation of titanium orthoesters
Procédé pour la préparation en continu d'orthoesters de titane

(30) Priorität: 23.11.1987 DE 3739577
(43) Veröffentlichungstag der Anmeldung: 31.05.1989
(73) Patentinhaber: HÜLS AKTIENGESELLSCHAFT, 45764 Marl (DE)
(72) Erfinder: Horns, Udo, Dr., D-7888 Rheinfelden (DE); Srebny, Hans-Günther, Dr., D-3078 Stolzenau (DE); Vahlensieck, Hans-Joachim, Dr., D-7867 Wehr (DE)

(56) Entgegenhaltungen:
- FR-A- 1 592 031
- GB-A- 2 177 397
- US-A- 4 681 959

## Beschreibung

Gegenstand der vorliegenden Erfindung ist ein Verfahren zur kontinuierlichen Herstellung von Orthoestern des Titans, bei dem in einer ersten Veresterungsstufe Titantetrahalogenid mit Alkohol im Molverhältnis zwischen 1 : 2 und 1 : 4 in Gegenwart eines Lösungsmittels bei Siedetemperatur unter Abtrennung von Halogenwasserstoff umgesetzt wird und bei dem das in der ersten Veresterungsstufe erhaltene Reaktionsprodukt in einer zweiten Veresterungsstufe unter Zusatz von Säureakzeptoren und gegebenenfalls der restlichen Menge an Alkohol zu dem Orthoester umgesetzt wird. Dieser Orthoester wird dann auf an sich bekannte Weise von dem Lösungsmittel und den übrigen Nebenprodukten abgetrennt.

In der DE 35 22 904-A1 wird die Durchführung dieses bekannten Verfahrens beschrieben. Dabei wird die zweite Veresterungsstufe in dem gleichen Reaktor durchgeführt, in dem auch die erste Veresterungsstufe abläuft. Dabei ist es wichtig, daß mit der zweiten Veresterungsstufe erst dann begonnen wird, wenn aus dem Reaktor der gesamte oder der weitaus überwiegende Anteil des freigewordenen Halogenwasserstoffs ausgetrieben ist. Dies macht diese Arbeitsweise äußerst zeitaufwendig und reduziert beträchtlich die Raum-Zeit-Ausbeute dieser Verfahrensweise.

Es bestand deshalb die Aufgabe, das in der DE 35 22 904 beschriebene Verfahren so zu verbessern, daß man höhere Raum-Zeit-Ausbeuten erhält, wobei der Anteil der Nebenprodukte gegenüber dem Verfahren der DE 35 22 904 mindestens genauso gering wie dort gehalten werden soll.

In Erfüllung dieser Aufgabe wurde nun ein kontinuierliches Verfahren zur Herstellung der Orthoester von Titan gefunden, das dadurch gekennzeichnet ist,
daß man Titantetrahalogenid und Alkohol zusammen mit dem Lösungsmittel gleichzeitig in die flüssige Phase der ersten Veresterungsstufe, die in einem ersten, mit Rückflußkühler und Halogenwasserstoff-Ableitung versehenen Reaktor auf Siedetemperatur gehalten wird, einleitet, das erhaltene Reaktionsprodukt kontinuierlich vom Boden dieses ersten Reaktors entnimmt und daraufhin - gegebenenfalls über einen zweiten oder weiteren, mit Rückflußkühler und Halogenwasserstoff-Ableitung versehenen Reaktor, in dem das Reaktionsprodukt des ersten Reaktors weiter auf Siedetemperatur gehalten wird und von dessen Bodenteil das Reaktionsprodukt abgelassen wird - im Wechsel in zwei oder mehrere Neutralisationsreaktoren überführt, in die kontinuierlich während der Eingabe und Abkühlung des Reaktionsprodukts aus der ersten Veresterungsstufe die Restmenge des Alkohols und der Säureakzeptor durch voneinander getrennte Zuleitungen eingeführt werden und aus denen während der Füllzeit des einen Neutralisationsreaktors der in dem anderen Reaktor entstandene Orthoester in an sich bekannter Weise abgetrennt wird.

Die erste Veresterungsstufe wird demzufolge so durchgeführt, daß in den Veresterungsreaktor kontinuierlich sowohl die Ausgangsprodukte als auch das Lösungsmittel eingegeben werden. Die Einführungen erfolgen durch räumlich voneinander getrennte Zuleitungen in der Weise, daß pro Zeiteinheit immer das angegebene Molverhältnis von Titanhalogenid : Alkohol eingehalten wird und diese Verbindungen, insbesondere der Alkohol, direkt unter die Flüssigkeitsoberfläche eingeleitet werden. Es ist jedoch auch möglich, die Einleitungsrohre kurz über der Flüssigkeitsoberfläche enden zu lassen, so daß die Reaktionskomponenten während der Eingabe in den Reaktor praktisch nicht mit dem über der Flüssigkeit befindlichen Gas in Berührung kommen. Vorzugsweise werden beide Reaktionskomponenten als Lösung in dem gewählten

Lösungsmittel in den ersten Veresterungsreaktor eingeleitet. Prinzipiell ist es jedoch auch möglich, nur einen der Reaktionspartner gemeinsam mit dem Lösungsmittel einzuführen. Wichtig ist jedoch, daß die eingeführte Lösungsmittelmenge mindestens so bemessen ist, daß das Verhältnis der Summe der Reaktionspartner zu dem Lösungsmittel zwischen 1 : 0,5 und 1 : 2 liegt.

Es ist weiterhin auch möglich, das Lösungsmittel in der notwendigen Menge durch ein weiteres Einleitungsrohr in den Veresterungsreaktor einzuleiten.

Das Reaktionsgemisch wird in dem Veresterungsreaktor auf Siedetemperatur gehalten. Der bei der Reaktion entstehende Chlorwasserstoff entweicht über ein Ableitungsrohr und kann anschließend auf an sich bekannte Weise absorbiert und einer Weiterverwendung zugeführt werden.

Das Reaktionsprodukt wird kontinuierlich vom Boden des Veresterungsreaktors abgezogen. Die pro Zeiteinheit abgezogene Menge entspricht der Menge der in der gleichen Zeit in den Reaktor eingegebenen Reaktionspartner zuzüglich des Lösungsmittels. Bei einer langsamen Zugabe der Reaktionspartner erhält man am Boden des Reaktors bereits ein Reaktionsprodukt, das überwiegend aus den gewünschten Partialestern besteht, so daß eine Überführung in einen oder mehrere weitere Veresterungsreaktoren nicht notwendig ist und das Reaktionsprodukt direkt in einen Neutralisationsreaktor überführt werden kann. Im allgemeinen wird das Reaktionsprodukt aus dem ersten Veresterungsreaktor in einen zweiten Veresterungsreaktor überführt, der wiederum mit Rückflußkühler und Halogenwasserstoff-Ableitungsrohr versehen ist.

In diesem Reaktor wird das Reaktionsprodukt weiterhin auf Siedetemperatur gehalten und der entstehende Chlorwasserstoff abgeleitet.

Aus dem zweiten Veresterungsreaktor wird das Reaktionsprodukt wiederum kontinuierlich am Boden abgezogen und in einen Neutralisationsreaktor überführt. Es ist jedoch auch möglich, das Reaktionsprodukt noch in einen oder mehrere weitere Veresterungsreaktoren einzuleiten, die in gleicher Weise wie der zweite Veresterungsreaktor betrieben werden.

Unter dem Boden der Veresterungsreaktoren wird erfindungsgemäß das untere Viertel des Reaktors verstanden. Vorzugsweise ist es der Bereich der tiefsten Stelle des Reaktors, von dem aus das Veresterungsprodukt abgezogen wird.

Das Veresterungsprodukt wird in einem der im Wechsel betriebenen Neutralisationsreaktoren in an sich bekannter Weise zum Orthoester umgesetzt. Während des Füllvorgangs wird in diesen Reaktor noch so viel Alkohol eingeleitet, wie zur vollständigen Umsetzung zum Orthoester notwendig ist. Sobald in diesem Reaktor der für die Neutralisation gewünschte Füllgrad erreicht ist, wird das Reaktionsprodukt der ersten Veresterungsstufe in einen zweiten Neutralisationsreaktor eingeleitet, der in gleicher Weise wie der erste Neutralisationsreaktor betrieben wird: Nach Erreichen des gewünschten Füllgrades wird der Reaktorinhalt mit dem Säureakzeptor versetzt; dabei bilden sich salzartige Hydrohalogenide und der gewünschte Orthoester. Nach beendeter Neutralisation wird der Reaktor entleert und das Reaktionsprodukt in an sich bekannter Weise aufgearbeitet. Der entleerte Reaktor selbst steht dann wieder zur Füllung mit dem Veresterungsprodukt der ersten Reaktionsstufe zur Verfügung, nachdem der zweite - oder gegebenenfalls noch ein weiterer - Neutralisationsreaktor mit dem Reaktionsprodukt der ersten Reaktionsstufe gefüllt ist.

Die Neutralisationsreaktoren werden nicht beheizt; während des Füllvorgangs wird das Reaktionsgemisch abgekühlt, zweckmäßigerweise auf Temperaturen zwischen 20 und 50 °C. Die Neutralisation mit dem Säureakzeptor erfolgt vorzugsweise bei Unterdruck.

Ausgangsstoffe für das erfindungsgemäße Verfahren sind einerseits die Tetrachloride, -bromide und -jodide des Titans und andererseits primäre und sekundäre aliphatische Alkohole mit 1 bis 18 C-Atomen, wie beispielsweise Ethanol, n- und iso-Propanol, Cyclopentanol, Amylalkohole, Cyclohexanol, 2-Ethylhexanol, Octanole, Nonanole, Decanole, Dodecylalkohol, Cetylalkohol, Octadecanol, Oleanol, iso-Borneol, Menthol etc.

Als Lösungsmittel und gleichzeitig inerte Medien für das erfindungsgemäße Verfahren eignen sich aliphatische und/oder chlorierte Kohlenwasserstoffe. Im einzelnen sind dies beispielsweise die Pentane, Hexane, Heptane, das Isooctan, Cyclohexan, Methylcyclohexan, Benzinfraktionen wie Petrolether oder Ligroin, Methylenchlorid, Chloroform, Tetrachlorkohlenstoff, trans-Dichlorethylen, Trichlorethylen, Perchlorethylen, 1,1,1-Triclorethan, Trichlortrifluorethylen, 1,1,1,3-Tetrachlorpropan etc.

Als Säureakzeptoren dienen hauptsächlich primäre, sekundäre und tertiäre Amine, die entsprechende Hydrohalogenide leicht bilden. Bevorzugt wird Ammoniak eingesetzt.

### Beispiel 1.

Die Reaktionsapparatur besteht aus einem beheizbaren 500-ml-Mehrhalsdoppelmantelkolben, der mit Rührer, Innenthermometer, Kühler, Bodenventil und zwei Tauchrohren versehen ist. An die Tauchrohre sind zwei Tropftrichter angeschlossen. Die Tauchrohre ragen unter die Oberfläche der im Reaktor befindlichen Flüssigkeit.

Es werden einmalig 200 g Heptan vorgelegt und am Rückfluß bei 95 °C gekocht. Über zwei Einleitungsrohre werden die Gemische A: 95 g TiCl₄ (0,5 Mol) in 98,6 g Heptan und B: 90 g n-Propanol (1,5 Mol) in 57,8 g Heptan innerhalb von 50 Minuten zudosiert. Es setzt eine lebhafte HCl-Entwicklung ein. Nach 10 Minuten wird kontinuierlich entsprechend der Dosierung über die Tauchrohre über ein Bodenventil das entstandene Reaktionsprodukt abgezogen und in einen darunter liegenden zweiten Reaktor (Mehrhalsdoppelmantelkolben mit Rührer, Innenthermometer, Kühler und Bodenventil), der mindestens auf Siedetemperatur des Lösungsmittels vorgeheizt ist, eingeleitet; in diesem wird die Reaktion vervollständigt. Nach Ablauf von 30 Minuten wird entsprechend dem Zustrom aus dem ersten Reaktor kontinuierlich Produkt abgezogen und in einen von zwei darunter angeordneten Reaktoren abgefüllt, in dem das Produkt gekühlt (20 bis 50 °C) und mit dem restlichen, zur vollständigen Umsetzung zum Orthoester nötigen n-Propanol (30 g/0,5 Mol) während 10 Minuten versetzt wird. Sobald der dritte Reaktor (Mehrhalsdoppelmantelkolben mit Rührer, Innenthermometer, Kühler und Bodenventil) gefüllt ist, wird dieser bis auf 150 mbar evakuiert; daraufhin wird gasförmig Ammoniak bis zur neutralen bzw. schwach basischen Reaktion des Reaktionsprodukts eingeleitet.

Bis zur Neutralisation sind 51,25 % des insgesamt im TiCl₄ vorhandenen Chlors in Form von HCl-Gas kontinuierlich entfernt worden. Während der Neutralisation (20 Minuten) wird der vierte Reaktor gefüllt, so daß die beiden Neutralisationsreaktoren im Wechsel den kontinuierlichen Produktstrom aufnehmen.

Das fertige Produktgemisch aus Ti(O-n-C₃H₇)₄, Heptan und NH₄Cl wird über ein Bodenventil abgezogen, in einer Nutsche das NH₄Cl abgetrennt, im Vakuum das Heptan abgezogen und das Ti(O-n-C₃H₇)₄ destilliert.

### Beispiel 2

In einer wie im Beispiel 1 beschriebenen Reaktionsapparatur werden einmalig 200 g Heptan vorgelegt und am Rückfluß bei 95 °C gekocht. Über zwei Einleitungsrohre wurden die Gemische A: 475 g TiCl₄ (2,5 Mol) in 500 g Heptan und B: 450 g i-Propanol (7,5 Mol) in 300 g Heptan innerhalb von 30 Minuten zudosiert. Es setzt eine lebhafte HCl-Entwicklung ein. Nach 1 Minute wird kontinuierlich entsprechend der Zudosierung über die Tauchrohre über ein Bodenventil das entstandene Reaktionsprodukt abgezogen und in einen darunter liegenden zweiten Reaktor, der mindestens auf die Siedetemperatur des Lösungsmittels vorgeheizt ist, eingeleitet; in diesem wird die Reaktion vervollständigt, und nach 50 Minuten wird entsprechend dem Zustrom aus dem Vorreaktor kontinuierlich Produkt abgezogen und in einen von zwei darunter angeordneten Reaktoren eingeleitet, darin auf 20 bis 50 °C gekühlt und mit dem restlichen, zur vollständigen Umsetzung zum Orthoester nötigen i-Propanol während 10 Minuten versetzt. Sobald der dritte Reaktor gefüllt ist, wird dieser bis auf 150 mbar evakuiert und daraufhin gasförmiges NH₃ bis zur neutralen bzw. schwach basischen Reaktion des Reaktionsprodukts eingeleitet.

Die Neutralisation und Aufarbeitung erfolgen wie im Beispiel 1 beschrieben. Bis zur Neutralisation sind 35 % des insgesamt im TiCl₄ vorhandenen Chlors in Form von HCl-Gas kontinuierlich entfernt worden.

### Beispiel 3

In einer wie im Beispiel 1 beschriebenen Reaktionsapparatur werden einmalig 200 g Oktan vorgelegt und am Rückfluß bei 105 °C gekocht. Über zwei Einleitungsrohre werden die Gemische A: 237,5 g TiCl₄ (1,25 Mol) in 350 g Oktan und B: 225 g n-Propanol (3,75 Mol) in 230 g Oktan innerhalb 140 Minuten zudosiert. Es setzt eine lebhafte HCl-Entwicklung ein. Nach 20 Minuten wird kontinuierlich entsprechend der Zudosierung über die Tauchrohre über ein Bodenventil das entstandene Reaktionsprodukt abgezogen und in einen darunter liegenden zweiten Reaktor, der mindestens auf die Siedetemperatur des Lösungsmittels vorgeheizt ist, eingeleitet; in diesem wird die Reaktion vervollständigt, und nach 40 Minuten wird entsprechend dem Zustrom aus dem ersten Reaktor kontinuierlich Produkt abgezogen und in einen von zwei darunter angeordneten Reaktoren überführt, darin auf 20 bis 50 °C gekühlt und mit dem restlichen, zur vollständigen Umsetzung zum Orthoester nötigen n-Propanol während 10 Minuten versetzt. Sobald der dritte Reaktor gefüllt ist, wird dieser bis auf 150 mbar evakuiert, daraufhin gasförmiges NH₃ bis zur neutralen bzw. schwach basischen Reaktion des Reaktionsprodukts eingeleitet.

Neutralisation und Aufarbeitung erfolgen wie im Beispiel 1 beschrieben. Bis zur Neutralisation sind 56 % vom HCl-Gas kontinuierlich entfernt worden.

### Beispiel 4

In einer wie im Beispiel 1 beschriebenen Reaktionsapparatur werden einmalig 200 g Heptan vorgelegt und am Rückfluß bei 95 °C gekocht. Über zwei Einleitungsrohre werden die Gemische A: 190 g TiCl₄ (1 Mol) in 200 g Heptan und B: 138 g Ethanol (3 Mol) in 155 g Heptan innerhalb von 130 Minuten zudosiert. Es setzt eine lebhafte HCl-Entwicklung ein. Nach 10 Minuten wird kontinuierlich entsprechend der Zudosierung über die Tauchrohre über ein Bodenventil das entstandene Reaktionsprodukt abgezogen und in einen darunter liegenden zweiten Reaktor, der mindestens auf die Siedetemperatur des Lösungsmittels vorgeheizt ist, eingeleitet; in diesem wird die Reaktion vervollständigt, und nach 50 Minuten wird entsprechend dem Zustrom aus dem Vorreaktor kontinuierlich Produkt abgezogen, in einen von zwei darunter angeordneten Reaktoren eingeführt, auf 20 bis 50 °C gekühlt und mit dem restlichen, zur vollständigen Umsetzung zum Orthoester nötigen Ethanol während 10 Minuten versetzt. Sobald der dritte Reaktor gefüllt ist, wird dieser bis auf 150 mbar evakuiert und gasförmiges NH₃ bis zur neutralen bzw. schwach basischen Reaktion des Reaktionsprodukts eingeleitet.

Neutralisation und Aufarbeitung erfolgen wie im Beispiel 1 beschrieben. Bis zur Neutralisation sind 47,5 % des insgesamt im TiCl₄ vorhandenen Chlors in Form von HCl-Gas kontinuierlich entfernt worden.

### Beispiel 5

In einer wie im Beispiel 1 beschriebenen Reaktionsapparatur werden einmalig 200 g CHCl₃ vorgelegt und am Rückfluß bei 60 °C gekocht. Über zwei Einleitungsrohre werden die Gemische A: 95 g TiCl₄ (0,5 Mol) in 215 g CHCl₃ und B: 92 g Ethanol (2 Mol) in 125 g CHCl₃ innerhalb von 80 Minuten zudosiert. Es setzt eine lebhafte HCl-Entwicklung ein. Nach 15 Minuten wird kontinuierlich entsprechend der Zudosierung über die Tauchrohre über ein Bodenventil das entstandene Reaktionsprodukt abgezogen und in einen darunter liegenden zweiten Reaktor, der mindestens auf die Siedetemperatur des Lösungsmittels vorgeheizt war, eingeleitet; in diesem wird die Reaktion vervollständigt, und nach 40 Minuten wird entsprechend dem Zustrom aus dem Vorreaktor kontinuierlich Produkt abgezogen, in einen von zwei darunter angeordneten Reaktoren eingeführt und auf 20 bis 50 °C gekühlt. Sobald der dritte Reaktor gefüllt ist, wird dieser bis auf 150 mbar evakuiert und gasförmiges NH₃ bis zur neutralen bzw. schwach basischen Reaktion des Reaktionsprodukts eingeleitet.

Neutralisation und Aufarbeitung erfolgen wie im Beispiel 1 beschrieben. Bis zur Neutralisation sind 51 % des insgesamt im TiCl₄ vorhandenen Chlors in Form von HCl-Gas kontinuierlich entfernt worden.

### Beispiel 6

In einer wie im Beispiel 1 beschriebenen Reaktionsapparatur werden einmalig 200 g Heptan vorgelegt und am Rückfluß bei 95 °C gekocht. Über zwei Einleitungsrohre werden die Gemische A: 665 g TiCl₄ (3,5 Mol) in 750 g Heptan und B: 777 g n-Butanol (10,5 Mol) in 600 g Heptan innerhalb von 360 Minuten zudosiert. Es setzt eine lebhafte HCl-Entwicklung ein. Nach 10 Minuten wird kontinuierlich entsprechend der Zudosierung über die Tauchrohre über ein Bodenventil das entstandene Reaktionsprodukt abgezogen und in einen darunter liegenden zweiten Reaktor, der mindestens auf die Siedetemperatur des Lösungsmittels vorgeheizt war, eingeleitet; in diesem wird die Reaktion vervollständigt, und nach 40 Minuten wird entsprechend dem Zustrom aus dem Vorreaktor kontinuierlich Produkt abgezogen und in einen von zwei darunter angeordneten Reaktoren eingeleitet, auf 20 bis 50 °C gekühlt und mit dem restlichen, zur vollständigen Umsetzung zum Orthoester nötigen n-Butanol während 20 Minuten versetzt. Sobald der dritte Reaktor gefüllt ist, wird dieser bis auf 150 mbar evakuiert und gasförmiges NH₃ bis zur neutralen bzw. schwach basischen Reaktion des Reaktionsprodukts eingeleitet.

Neutralisation und Aufarbeitung erfolgen wie im Beispiel 1 beschrieben. Bis zur Neutralisation sind 47,5 % des insgesamt im TiCl₄ vorhandenen Chlors in Form von HCl-Gas kontinuierlich entfernt worden.

## Patentansprüche

1. Verfahren zur kontinuierlichen Veresterung von Titantetrahalogenid, bei der das Titantetrahalogenid in einer ersten Veresterungsstufe mit Alkohol im Molverhältnis zwischen 1 : 2 und 1 : 4 in Gegenwart von Lösungsmitteln bei Siedetemperatur unter Abtrennung von Halogenwasserstoff umgesetzt wird und das dabei erhaltene Reaktionsprodukt anschließend in einer zweiten Veresterungsstufe unter Zusatz von Säureakzeptoren und gegebenenfalls der restlichen zur Bildung des Orthoesters noch notwendigen Menge Alkohol zu dem Orthoester umgesetzt wird, **dadurch gekennzeichnet,** daß man Titantetrahalogenid und Alkohol zusammen mit dem Lösungsmittel gleichzeitig in die flüssige Phase der ersten Veresterungsstufe, die in einem ersten, mit Rückflußkühler und Halogenwasserstoff-Ableitung versehenen Reaktor auf Siedetemperatur gehalten wird, einleitet, das erhaltene Reaktionsprodukt kontinuierlich vom Boden dieses ersten Reaktors entnimmt und daraufhin - gegebenenfalls über einen zweiten oder weiteren, mit Rückflußkühler und Halogenwasserstoff-Ableitung versehenen Reaktor, in dem das Reaktionsprodukt des ersten Reaktors weiter auf Siedetemperatur gehalten wird und von dessen Bodenteil das Reaktionsprodukt abgelassen wird - im Wechsel in zwei oder mehrere Neutralisationsreaktoren überführt, in die kontinuierlich während der Eingabe und Abkühlung des Reaktionsprodukts aus der ersten Veresterungsstufe die Restmenge des Alkohols und der Säureakzeptor durch voneinander getrennte Zuleitungen eingeführt werden und aus denen während der Füllzeit des einen Neutralisationsreaktors der in dem anderen Reaktor entstandene Orthoester in an sich bekannter Weise abgetrennt wird.

2. Verfahren gemäß Anspruch 1, dadurch gekennzeichnet, daß in der ersten Veresterungsstufe des Volumenverhältnis von Titantetrahalogenid und Alkohol zu Lösungsmittel zwischen 1 : 0,5 und 1 : 2 liegt.

3. Verfahren gemäß einem der Ansprüche 1 oder 2, dadurch gekennzeichnet, daß man einzelne oder alle Verfahrensschritte bei Unterdruck durchführt.

## Claims

1. Process for the continuous esterification of titanium tetrahalide in which the titanium tetrahalide is reacted in a first esterification step with alcohol in the molar ratio between 1:2 and 1:4 in the presence of solvents at boiling temperature and with separation off of hydrogen halide and in which the reaction product thus obtained is then converted to the orthoester in a second esterification step while subject to addition of acid acceptors and optionally the addition of the remainder of the amount of alcohol still necessary for formation of the orthoester, characterised in that titanium tetrahalide and alcohol together with the solvent are introduced simultaneously in the liquid phase of the first esterification step which is held at boiling temperature in a first reactor provided with reflux condenser and hydrogen halide withdrawal duct, the reaction product obtained is withdrawn continuously from the base of this first reactor and thereupon - optionally via a second or further reactor provided with reflux condenser and hydrogen halide withdrawal duct, in which reactor the reaction product of the first reactor is kept again at boiling temperature and from the base part of which the reaction product is drained off - is transferred in a switching operation therebetween into two or several neutralisation reactors into which the residual amount of the alcohol and the acid acceptor are introduced through conduits separated from one another continuously during the introduction and cooling of the reaction product from the first esterification step, and out of which, during the filling time of the one neutralisation reactor, the orthoester being formed in the other reactor is separated off in known manner.

2. Process according to claim 1, characterised in that, in the first esterification step the volume ratio of titanium tetrahalide and alcohol to solvent is between 1:0.5 and 1:2.

3. Process according to one of claims 1 or 2, characterised in that individual or all processing steps are carried out at reduced pressure.

## Revendications

1. Procédé pour transformer en continu du tétrahalogénure de titane en un ester, procédé selon lequel on fait réagir dans une première étape d'estérification le tétrahalogénure de titane avec de l'alcool selon un rapport molaire compris entre 1:2 et 1:4, en présence de solvants à la température d'ébullition et avec séparation de l'halogénure d'hydrogène, et, dans une seconde étape d'estérification, on soumet ensuite le produit ainsi obtenu par cette réaction, avec addition d'accepteurs d'acide et éventuellement de la quantité d'alcool restante encore nécessaire pour la formation de l'orthoester, à une réaction de formation de l'orthoester, procédé caractérisé en ce qu'on introduit simultanément le tétrahalogénure de titane et l'alcool avec le solvant dans la phase liquide de la première étape d'estérification, qui est maintenue à la température d'ébullition dans un premier réacteur équipé d'un réfrigérant de reflux et d'un conduit de départ de l'halogénure d'hydrogène; on retire en continu le produit de réaction ainsi obtenu du fond de ce premier réacteur et on le transfère alternativement - éventuellement en passant par un second ou d'autre(s) réacteur(s) équipé(s) d'un réfrigérant de reflux et d'un conduit d'évacuation de l'halogénure d'hydrogène, réacteur(s) dans lesquel(s) on maintient encore à la température d'ébullition le produit de réaction provenant du premier réacteur et on laisse partir du fond de ce(s) réacteur(s) le produit de la réaction - dans deux ou plusieurs réacteurs de neutralisation dans lesquels on introduit en continu, pendant l'arrivée et le refroidissement du produit de la réaction provenant de la première étape d'estérification, la quantité restante d'alcool et de l'accepteur d'acide, introduits par des conduits séparés l'un de l'autre, et à partir desquels, pendant le temps de remplissage d'un premier réacteur de neutralisation, on sépare de façon connue en soi l'orthoester obtenu dans l'autre réacteur.

2. Procédé selon la revendication 1, caractérisé en ce que, dans la première étape d'estérification, le rapport en volume du tétrahalogénure de titane et de l'alcool au solvant se situe entre 1:0,5 et 1:2.

3. Procédé selon l'une des revendications 1 ou 2, caractérisé en ce qu'on effectue certaines ou toutes les étapes du procédé en opérant sous dépression.
